Europäisches Patentamt

European Patent Office

Office européen des brevets

(11) Publication number: **0 099 994**
**A1**

# EUROPEAN PATENT APPLICATION

(21) Application number: 83106364.9

(22) Date of filing: 30.06.83

(51) Int. Cl.³: **F 16 K 5/20**

(30) Priority: 02.07.82 IT 1517582 U

(43) Date of publication of application: 08.02.84
Bulletin 84/6

(84) Designated Contracting States: **AT BE CH DE FR GB LI
LU NL SE**

(71) Applicant: Tubaro, Bruno, Via Solimano, 76/2,
I-16030 Sori (Genova) (IT)

(72) Inventor: Tubaro, Bruno, Via Solimano, 76/2, I-16030 Sori
(Genova) (IT)

(74) Representative: Porsia, Dino, Dr. et al, c/o Succ. Ing.
Fischetti & Weber Via Caffaro 3, I-16124 Genova (IT)

(54) **A plug valve.**

(57) A valve with a rotatable spherical plug (9) comprising
a tight seal between the valve body (1) and at least one of
provided packing-holding rings (4, 5) which is slidably fitted
in the valve body (1), is guaranteed by an annular packing
(20) arranged around the packing-holding ring (4) and
housed within a corresponding enlargement (21) in the respective end of the valve body (1), it being possible to associate with said end of the valve body, alternatively and at
will, a connector sleeve (MA), so-called "self-adjusting",
the inner end (22) of which has en outside diameter which
is greater than that of the enlargement (21) in the respective
end of the valve body (1), so that the self-adjusting connector sleeve (MA) abuts by its inner end against the edge
portion of the valve body (1), and a connector sleeve (MR),
so-called "adjustable", the inner end (22) of which has an
outside diameter which is smaller than that of the enlargement (21) in the valve body (1), so that the said adjustable
connector sleeve (MR) can be slidably fitted into the said
enlargement (21), and can be axially adjusted therewithin.

0099994

Bruno Tubaro

"A Plug Valve"

The present invention refers to the valves having a rotatable spherical plug made of a suitable plastic material, such as polyvinyl chloride, which by a radially directed movement can be installed between, and can be removed from two co-axial, opposed ends of a pipe forming part of any plant whatsoever.

These valves comprise a valve body, in which the spherical plug is fitted between two co-axial packing-holding rings tightly assembled in the valve body, and carrying each not only the inner annular packing which cooperates with the spherical plug, but also an outer annular packing which is housed within a groove provided in the outside face of the respective packing-holding ring, against the said outer packing there being compressed the inner end of a connector sleeve arranged co-axially to the respective packing-holding ring, and connected to the valve body by means of a ring nut in overlapping relation with an external step of the connector sleeve, and which is screwed on a threaded external portion of the valve body.

The invention aims to provide a valve of the aforementioned type, which while still maintaining unchanged all its present advantages, as afforded by its construction and operation, can be easily and quickly converted at will into a valve in which the pressure against the spherical plug by the annular inner packings is self-adjustable (self-adjustable model), as well as into a valve in which the pressure against the spherical plug by the annular inner packings is adjustable within certain limits, either initially or afterwards (adjustable model).

To this end, according to the invention, the tight seal between the valve body and at least one of the packing-holding rings axially slidably fitted in the valve body, is guaranteed by means of an annular packing arranged around the packing-holding ring and housed within a matching enlargement in the respective end of the valve body. Thus, when using a connector sleeve of the so-called "self-adjusting" type, the inner end of which, that is to say, its end facing the valve, has an outside diameter which is greater than the diameter of the enlargement in the respective end of the valve body, this connector sleeve once it has been mounted onto, and has been clamped by means of the ring nut against the outside end surface of the packing-holding ring, abuts against the edge portion of the valve body, and is then confined in a fixed axial position. In such a position, the pressure against the spherical plug by the annular inner packing in the packing-holding ring will be determined only by the resiliency of said inner packing and by the resiliency of the outer packing compressed between the packing-holding ring and the connector sleeve, so that the said pressure is self-adjustable, that is to say, it adjusts itself within the limits of the said resiliencies. When using instead a connector sleeve of the so-called "adjustable" type, the inner end of which, that is its end facing the valve, has an outside diameter which is smaller than the diameter of the enlargement in the respective end of the valve body, this connector sleeve can be slidably fitted into the said enlargement in the valve body and can be axially driven to a smaller or higher extent thereinto, by accordingly more or less screwing the ring nut on the valve body, whereby the annular packing housed in the said enlargement will be resiliently compressed to a lesser or greater extent. Thus, by means of the adjustable connector sleeve and of the respective ring nut, it is possible to adjust at will the pressure against the spherical plug exerted by the annular inner packing housed in the packing-holding ring.

Both the ends of the valve may be constructed in the above-described manner, that is to say, both the packing-holding rings in the valve may be made axially slidable, and the right seal between each one of these rings and the valve body can be achieved by means of an annular packing arranged around the packing-holding ring and housed within an enlargement in the matching end of the valve body. In this case, the either self-adjusting or adjustable connector sleeves will be selected at will from a corresponding warehouse stock.

However, in one preferred embodiment of the invention, only one of the packing-holding rings is axially slidably fitted in the valve body, and the tight seal between the said ring and the valve body is guaranteed by an annular packing arranged around the packing-holding ring and housed within an enlargement in the valve body, while the other packing-holding ring is made integral, and preferably of one piece with the valve body; the two connector sleeves associated with the valve are interchangeable, and one of them is made in form of a self-adjusting connector, that is, with its inner end having an outside diameter which is greater than the diameter of the enlargement in the valve body, while the other one is made in form of an adjustable connector, that is, with its inner end having an outside diameter which is smaller than the diameter of said enlargement. According to whether it is wanted the self-adjusting or the adjustable model of the valve, either the self-adjusting or the adjustable connector sleeve will be mounted at the side of the axially slidable packing-holding ring, while the other connector sleeve will be mounted at the opposite side of the valve, where it has no effect on the pressure against the spherical plug by the respective annular inner packing, since the corresponding packing-holding ring is integral with the valve body, and therefore there is no annular packing between this ring and the valve body, nor a corresponding enlargement in the valve body for housing the said packing ring.

These and other characteristic features of the invention and the advantages arising therefrom will become apparent in a more detailed manner in the following specification of a valve according to the invention, shown in the annexed drawings, in which:

Figure 1 shows a valve according to the invention, in axial section and in the self-adjusting condition.

Figure 2 shows the lower part of the valve according to Figure 1, in axial section and in the adjustable condition.

Figures 3 and 4 show in section and in an enlarged scale a detail of the tight seal between a packing-holding ring and the valve body, respectively in the self-adjusting and adjustable conditions of said valve.

Figures 5 and 6 show in section and in an enlarged scale a detail of the tight seal between a packing-holding ring and the valve body, respectively in the self-adjusting and adjustable conditions of said valve, according to a modified embodiment of the invention.

Referring to the Figures, reference numeral 1 denotes the body of a valve which by a radially directed movement can be installed between, and can be removed from two co-axial, spaced apart ends (not shown) of a pipe forming part of any plant whatsoever . By the reference numeral 2 it is designated the spherical plug of the valve, which is provided with a through bore 3 having its axis on the spherical plug diameter, and which is rotatably fitted in the valve body, between two packing-holding co-axial rings 4, 5. The axis around which the spherical plug is rotated is perpendicular to the axis of its through bore 3, and it is the very same axis of its control stem 6, rotatably mounted in a corresponding transversal tubular extension 7 of the valve body 1. At its inward end the control stem 6 is formed with an abutment annular flange 8 which by its flat surface bears against a matching internal surface of the valve body 1, facing the flange 8. The inner end face of the control stem 6 terminates with a projecting median portion 9 about which the spherical plug 2 is fitted by means of a groove 10 cut in the outer surface thereof, whereby the control stem 6 and the spherical plug 2 are coupled in rotation.

The control stem 6 has a non-circular outer end 11 on which there is engaged the handle 12 for controlling the valve. The tight seal between the control stem 6 and the tubular extension 7 of the valve body 1 is guaranteed by two superposed annular packings 13, 14, each housed within a respective, suitable annular groove 15, 16 in the control stem 6. The radial depth of each one of the grooves 15, 16 decreases along stem 6 from the interior to the exterior of the valve.

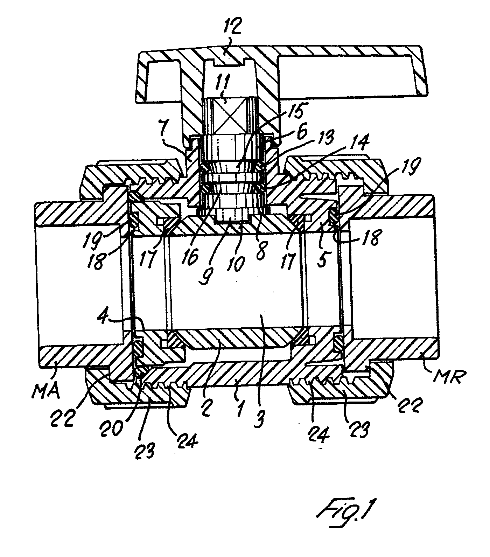

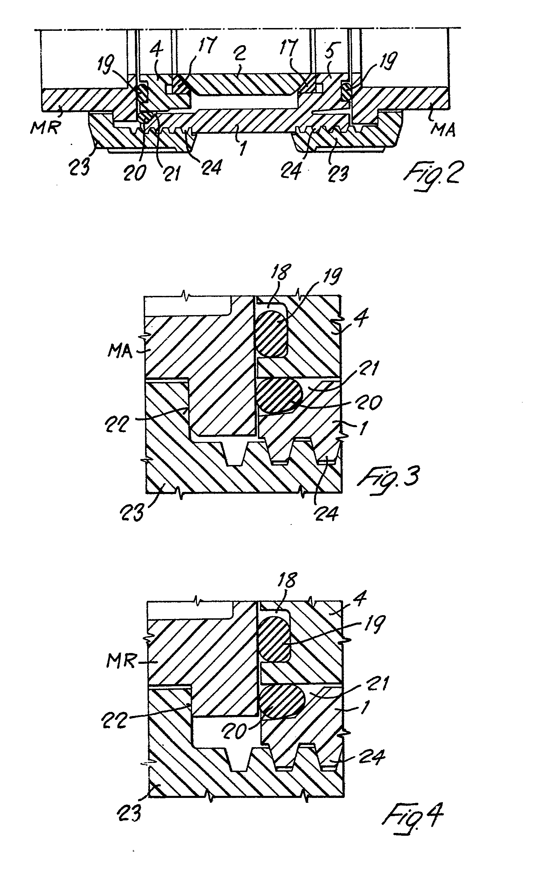

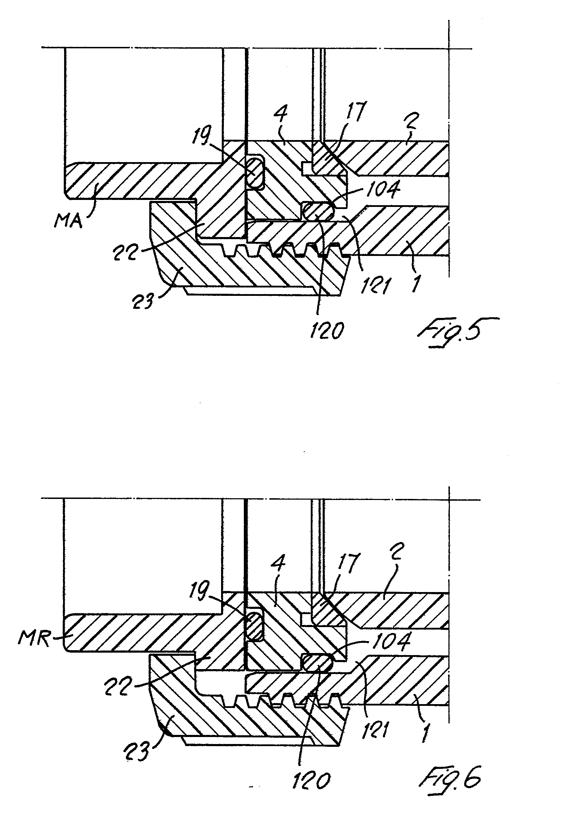

Both packing-holding rings 4 and 5 have each an annular packing 17 fitted on its inner side and cooperating with the spherical plug 2. In the outer face of each ring 4 and 5 there is formed a co-axial annular groove 18, in which an annular packing 19 is housed. The packing-holding ring 5 is integral, and is made of one piece with the valve body 1, while the other packing-holding ring 4 is axially slidably fitted in the valve body 1. The tight seal between this slidable ring 4 and the valve body 1 is guaranteed by means of an annular packing 20 embracing the outward end of the packing-holding ring 4 and housed within an enlargement 21 formed in the mating end of the valve body 1. The enlargement 21 is constructed cylindrical in at least its outward inlet portion, and may have a conically tapering inward portion, as shown particularly in Figures 3 and 4.

The above-disclosed valve is provided with two connector sleeves MA and MR, each of which may be a male or female, smooth or threaded, and may be made in the same or in a different manner as for what concerns their connection with the respective pipe end. By their internal edge surface facing the valve, these two connector sleeves are sealed against the outer annular packing 19 held in rings 4, 5, and are axially bound to, and tightened against the respective packing-holding ring 4, 5, each by means of a ring nut 23 screwed onto a corresponding threaded external portion 24 of the valve body 1, and being in overlapping relation with an external annular step 22 of the respective connector sleeve MA, MR. The tight seal between the connector sleeve MA, MR and the respective packing-holding ring 4, 5 is guaranteed by the annular packings 19 at both ends of the valve body, which initially project a little out of the outside surface of the packing-holding rings 4, 5, but are resiliently compressed by the corresponding connector sleeve MA, MR to a slight degree, and at the most until the connector sleeve comes to be contacting the outside surface of the respective packing-holding ring 4 or 5.

By screwing out the two ring nuts 23 and by axially shifting same so as to move them onto the corresponding connector sleeve MA, MR and onto the connected pipes, it is possible to radially remove the valve body 1 from the pipes which are joined thereto. Just in a similar manner, also the valve body 1 can be radially installed, or mounted again, between the two pipes to which it is then joined as described by means of the ring nuts. Moreover, it is possible to separate from the valve the pipe joined to the connector sleeve at the side of the packing-holding ring 5, which is integral of the valve body 1, and to leave the valve joined to the other pipe at the side of the axially slidable packing-holding ring 4, which pipe may be also under load, since it might be closed by means of said valve.

The two connector sleeves MA and MR may be mounted at will either on the one or the other end of the valve body 1, and their position is interchangeable. They however differ from each other in the outside diameter of their inner end 22, facing the valve. The connector sleeve MA, so-called self-adjusting, has an inner end 22 of a greater outside diameter, and in any case of such a diameter, that when the said self-adjusting connector sleeve MA is mounted onto the valve body 1 side corresponding with the slidable packing-holding ring 4, the said connector sleeve MA extends radially over and beyond the enlargement 21 and the respective packing 20, as far as the side edge portion of the surface of the mating end of the valve body 1. Therefore, when this self-adjusting connector sleeve MA has been tightened by means of the ring nut 23, the said connector bears against the said side edge portion of the mating end of the valve body 1, thus compressing the annular packing 20 into the enlargement 21, as shown in Figures 1 and 3. In these conditions, the spherical plug 2, both packings 17 and the axially slidable packing-holding ring 4 are clamped between the packing-holding ring 5 and the self-adjusting connector sleeve MA, which are both rigidly connected to the valve body 1. The pressure of both packings 17 against the plug 2 is then practically determined only by the resiliency of said packings 17 and to a small extent also by the resiliency of the outer packing 19, so that this pressure is self-adjusting, and there is no need of effecting any adjustment of same from the outside. In these conditions, shown in Figures 1 and 3, the valve according to the invention is a so-called self-adjusting valve.

The other connector sleeve MR, so-called adjustable, has its inner end 22, facing the valve, of a smaller diameter, which in any case is smaller than the diameter of the enlargement 21 in the valve body 1, so that when the said adjustable connector sleeve MR is mounted onto the valve body 1 side corresponding with the slidable packing-holding ring 4, the said connector does not extend radially beyond the said enlargement 21, and can slide into said enlargement 21, as it clearly appears in Figures 2 and 4. Therefore, it is possible to adjust the connector sleeve MR according to different axial positions, by more or less screwing on the ring nut 23 and by causing the connector sleeve to slide to a lesser or greater extent into the enlargement 21 in the valve body, whereby the annular packing will be accordingly compressed. In these conditions, the spherical plug 2, both packings 17 and the slidable packing-holding ring 4 are clamped between a fixed member, which is the packing-holding ring 5 integral with the valve body 1, and an axially shiftable member, which is the adjustable connector sleeve MR, so that the pressure of packings 17 is adjustable as desired by means of said connector sleeve MR and the respective ring nut 23. In the conditions shown in Figures 2 and 4, the valve according to the invention is a so-called adjustable valve.

The mounting of the self-adjusting connector sleeve MA and of the adjustable connector sleeve MR onto the valve body 1 at the side of the packing-holding ring 5 integral with the valve body 1 is not a problem, since in any case both of these connectors have their inner end of a diameter which is such as to permit the application of the ring nut 23.

Both the self-adjusting and adjustable connector sleeves MA and MR, respectively, will be suitably marked so as to be easily distinguishable the one from the other. In a modified embodiment of the valve according to the invention, both the valve ends are made as described and shown in connection with the valve end to the left-hand side in Fugures 1 and 2, that is to say, at both sides of the spherical plug 2 there are provided axially slidable packing-holding rings 4, each surrounded by an annular packing 20 housed within an enlargement 21 in the corresponding end of the valve body 1.

The above-described valves according to the invention are preferably made of a suitable plastic material, such as polyvinyl chloride.

With particular reference to Figures 5 and 6, a modification is illustrated, according to which the tight seal between the packing-holding ring 4 and the valve body 1 is obtained by adopting the same principle as illustrated in connection with the embodiment of Figures 1 and 2, but with a different arrangement of the packing element which precisely provides for the tight seal between the ring 4 and the body 1. The packing element, which consists of an annular packing 120, is housed in an annular groove 104 obtained at the inner end of the packing-holding ring 4 (i.e. the end directed towards the spherical plug 2). The enlargement of the valve body 1, cooperating with the said annular packing 120, is indicated by reference numeral 121. The other reference numerals are the same as those employed in the embodiments of Figures 1 and 2, since they indicate identical parts. Figure 5 represents a valve in the self-adjusting condition, with the connector sleeve MA abutting against the edge of the valve body 1, while Figure 6 represents a valve in the adjustable condition, with the connector sleeve MR having the possibility of sliding into the enlargement 121.

Many other modifications, particularly in the arrangement of the annular packings provided on the packing-holding rings, are possible, without departing from the basic principle of the invention, as above described and as claimed hereafter.

## CLAIMS

1. A valve with a rotatable spherical plug (2), made of a suitable plastic material, which by a radially directed movement can be installed between, and can be removed from two opposed co-axial ends of a pipe, which valve comprises a valve body (1) in which the spherical plug (2) is rotatably fitted between two co-axial packing-holding rings (4, 5) tightly assembled in the valve body (1), and carrying each not only the inner annular packing (17) which cooperates with the spherical plug (2), but also an outer annular packing (19) which is housed in a groove (18) cut in the outside face of the respective packing-holding ring (4, 5), against the said outer annular packing (19) there being compressed the inner end of a connector sleeve (MA, MR) arranged co-axially to the respective packing-holding ring (4, 5), and bound to the valve body by means of a ring nut (23) in overlapping relation with an outward step (22 of the connector sleeve (MA, MR), and being screwed on a threaded external portion in the valve body (1), characterized in that the tight seal between the valve body (1) and at least one (4) of the packing-holding rings which is slidably fitted in the valve body (1), is guaranteed by an annular packing (20) arranged around the packing-holding ring (4) and housed within a corresponding enlargement (21) in the respective end of the valve body (1), it being possible to associate with said end of the valve body, alternatively and at will, a connector sleeve (MA), so-called "self-adjusting", the inner end (22) of which, that is to say, its end facing the valve, has an outside diameter which is greater than that of the enlargement (21) in the respective end of the valve body, so that the self-adjusting connector sleeve (MA) abuts by its inner end against the edge portion of the valve body, and a connector sleeve (MR), so-called "adjustable", the inner end (22) of which, that is to say, its end facing the valve, has an outside diameter which is smaller than that of the enlargement (21) in the valve body, so that the said adjustable connector sleeve (MR) can be slidably fitted into the said enlargement (21), and can be axially adjusted therewithin.

2. A valve according to Claim 1, characterized in that both the packing-holding rings (4, 5) are so provided as to be axially slidable, and the right seal between each one of these rings and the valve body (1) is achieved by means of a respective annular packing (20) arranged around the packing-holding ring (4, 5) and housed within an enlargement (21) in the valve body (1).

3. A valve according to Claim 1, characterized in that only one (4) of the packing-holding rings is axially slidably fitted in the valve body (1), and the right seal between the said ring (4) and the valve body is guaranteed by an annular packing (20) arranged around the packing-holding ring (4) and housed within an enlargement (21) in the valve body, while the other packing-holding ring (5) is made integral, and preferably of one piece with the valve body (1), and the two connector sleeves (MA, MR) associated to this valve are interchangeable, and one of them (MA) is made in form of a self-adjusting connector, that is, with the outside diameter of its inner end (22) which is greater than the diameter of the enlargement (21) in the valve body, while the other one (MR) is made in form of an adjustable connector, that is with the out-side diameter of its inner end (22) being smaller than the diameter of said enlargement (21).

4. A valve according to Claim 1, characterized in that the enlargement (21) in the valve body (1) is a cylindrical or slightly conical enlargement at least in correspondence of its outer portion.

5. A valve according to Claim 4, characterized in that the said enlargement (21) presents a portion tapering inward in a substantially conical manner, after an initial cyclindrical or slightly conical portion in the outward section of said enlargement.

Fig.1

Fig.2

Fig.3

Fig.4

Fig.5

Fig.6

European Patent Office

**EUROPEAN SEARCH REPORT**

Application number

| | DOCUMENTS CONSIDERED TO BE RELEVANT | | EP 83106364.9 | |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | CH - A5 - 572 588 (G. FISCHER A.G.) <br> * Column 1, line 1 - column 3, line 32; fig. 1 * | 1,2 | F 16 K 5/20 |
| A | US - A - 3 550 902 (E.J. PIDGEON) <br> * Column 2, lines 1-42; fig. 1 * | 1-3 | |
| A | DE - A1 - 3 044 201 (R&G SLOANE MANUFACTURING CO. INC.) <br> * Claims 1,5-10; fig. 1-3 * | 1-3 | |
| A | DE - B - 1 216 636 (FABBRICA ITALIANA PLASTICI S.R.L.) <br> * Totality * | 1 | |
| A | FR - A - 2 100 237 (GROVE VALVE AND REGULATOR COMP.) <br> * Totality * | 1 | TECHNICAL FIELDS SEARCHED (Int. Cl. ³) <br><br> F 16 K |

The present search report has been drawn up for all claims

| Place of search | Date of completion of the search | Examiner |
|---|---|---|
| VIENNA | 14-10-1983 | ROUSSARIAN |